# EUROPÄISCHE PATENTSCHRIFT

(11) **EP 2 348 236 B1**
(45) Veröffentlichungstag und Bekanntmachung des Hinweises auf die Patenterteilung: **07.01.2015**
(21) Anmeldenummer: 10189622.3
(22) Anmeldetag: 02.11.2010
(51) Int. Cl.: F16J 15/06, F16J 15/14, F16L 55/11, F16J 15/10, F16L 55/162, F16L 55/16

(54) **Dichtungsanordnung zum Abdichten von Leckagen**
Seal assembly for sealing leaks
Agencement d'étanchéité pour étanchéifier des fuites

(30) Priorität: 12.01.2010 DE 102010000826
(43) Veröffentlichungstag der Anmeldung: 27.07.2011
(73) Patentinhaber: Robert Bosch GmbH, 70442 Stuttgart (DE)
(72) Erfinder: Haeberer, Rainer, 75015, Bretten (DE)

(56) Entgegenhaltungen:
- EP-A2- 0 264 203
- US-A- 4 203 607
- US-B1- 6 223 526
- US-B1- 7 600 649

## Beschreibung

### Stand der Technik

Die Erfindung betrifft eine Dichtungsanordnung zur Abdichtung zur Außenatmosphäre hin von Baugruppen eines Systems zur Speicherung und/oder zum Transport von Flüssigkeiten, die bei Kontakt mit der Außenatmosphäre Kristalle bilden, wobei die Dichtungsanordnung mindestens eine Dichtung enthält. US 6223526B1 offenbart eine gattungsgemäße Dichtungsanordnung und eine gattungsgemäße Kraftfahrzeugeinrichtung.

### Offenbarung der Erfindung

Zur Reduzierung des Ausstoßes von NOₓ (gasförmige Oxide des Stickstoffs, insbesondere Stickoxide) durch die Abgase von Kraftfahrzeugen ist das SCR (Selective Catalytic Reduction)-Verfahren bekannt. Bei diesem Verfahren wird das NOₓ der Abgase mit Hilfe von Ammoniak zu N₂ und H₂O reduziert. Das Ammoniak wird aus einem flüssigen Reduktionsmittels bei Einleitung des Reduktionsmittels in einen Abgasstrang des Fahrzeuges durch Hydrolyse gebildet.

Als flüssiges Reduktionsmittel ist eine wasserklare, synthetisch hergestellte 32,5-prozentige Lösung (AUS 32) von hochreinem Harnstoff in demineralisiertem Wasser bekannt. Die AUS 32-Lösung ist in den ISO 22241-1:2006 definiert und wird unter dem Markennamen AdBlue^{®} vertrieben. Eine AUS 32-Lösung hat bei 25°C eine Viskosität von ca. 1,4 mPa x s.

Das flüssige Reduktionsmittel wird mit einer Pumpe über Leitungen von einem Reduktionsmittel-Tank zu einer Dosierungsvorrichtung gefördert. Nach Durchlaufen der Dosierungseinrichting wird das Reduktionsmittel in den Abgasstrang des Fahrzeugs gespritzt, wo die Hydrolyse zu Ammoniak erfolgt. Die Pumpe, der Reduktionsmittel-Tank, die Dosierungsvorrichtung und die Leitungen sind somit Baugruppen eines Systems zur Speicherung und zum Transport von einem flüssigen Reduktionsmittel, die fluiddicht zusammengefügt werden müssen.

Die Abdichtung der Bauteile und Baugruppen, beispielsweise durch Verschlusstopfen, sowie insbesondere die Abdichtung der Verbindungen zwischen den Baugruppen kann entweder durch Verschweißen oder über konventionelle Elastomerdichtungen erfolgen. Die Elastomerdichtungen können entweder radial oder axial abdichten.

Jedoch ist durch die sehr geringe dynamische Viskosität des flüssigen Reduktionsmittels eine dauerhafte Abdichtung durch Elastomerdichtungen nicht gewährleistet, insbesondere wenn sich die abgedichteten Stellen während des Betriebs geometrisch verändern oder sich bewegen. Dies kann vor allem bei Baugruppen aus Kunststoff der Fall sein, wenn diese hohen Temperaturen oder hohen Schüttelbeanspruchungen ausgesetzt sind. Betroffen können auch großflächige Baugruppen, insbesondere aus Kunststoff, sein, beispielsweise der Reduktionsmittel-Tank. Auch Druckspitzen des flüssigen Reduktionsmittels, zum Beispiel bei Einbringen einer großen Menge des Reduktionsmittels, können zu einer Undichtigkeit der Elastomerdichtungen führen. Eine ungenügende Abdichtung führt zu Leckagen des flüssigen Reduktionsmittels, die sich außerhalb der Abdichtung zeigen. Dabei bilden sich auch schon bei kleinen Leckagen weiße Kristalle aus dem in dem Reduktionsmittel enthaltenen Harnstoff. Die weißen Kristalle sind auf dem meist schwarzen Kunststoff der undichten Baugruppen jedoch störend. Auch führen die Leckagen zu einem erhöhten Verbrauch an flüssigem Reduktionsmittel.

Demgegenüber weist die Dichtungsanordnung mit den Merkmalen des Anspruchs 1 den Vorteil auf, dass die als Leckage an der Außenseite der Dichtung austretende Flüssigkeit, beispielsweise ein harnstoffhaltiges flüssiges Reduktionsmittel, in den mindestens einen Spalt hineingelangt, beispielsweise durch Kapillarkräfte in den Spalt hineingezogen wird und in dem Spalt verbleibt. Im Spalt kommt die Flüssigkeit mit der Außenatmosphäre in Kontakt und bildet Kristalle. Die Kristalle bilden sich also an einer Stelle, wo sie nicht direkt sichtbar werden. Darüber hinaus bilden die Kristalle eine feste Schicht, die das weitere Austreten von Flüssigkeit durch die Dichtung verhindert. Die erfindungsgemäße Dichtungsanordnung führt also zu einem Selbstheilungseffekt bei der Abdichtung der Dichtungsanordnung.

Erfindungsgemäß ist vorgesehen, dass eine Dichtungsanordnung zur Abdichtung zur Außenatmosphäre hin von Baugruppen eines Systems zur Speicherung und/oder zum Transport von Flüssigkeiten, die bei Kontakt mit der Außenatmosphäre Kristalle bilden, wobei die Dichtungsanordnung mindestens eine Dichtung enthält und mindestens einen der Dichtung zur Außenatmosphäre hin nachfolgenden Spalt aufweist, in dem durch die Dichtung austretende Flüssigkeit mit der Außenatmosphäre in Kontakt kommt.

Flüssigkeiten, die bei Kontakt mit der Außenatmosphäre Kristalle bilden, sind beispielsweise Lösungen eines Stoffes, der bei der Verdunstung von in den Lösungen enthaltenem Wasser in die Außenatmosphäre auskristallisiert. Nach einer Weiterbildung der Erfindung ist vorgesehen, dass die Flüssigkeiten Harnstofflösungen sind, insbesondere wasserklare, synthetisch hergestellte 32,5 %ige Harnstofflösungen, insbesondere AUS 32-Lösungen, sind.

Unter der Außenatmosphäre wird im Zusammenhang mit der vorliegenden Erfindung die die Baugruppen des Systems umgebende Luft verstanden.

Nach einer Weiterbildung der Erfindung ist vorgesehen, dass der Spalt abgewinkelt verlaufend ausgebildet ist. Nach einer Weiterbildung der Erfindung ist vorgesehen, dass dem Spalt zur Außenatmosphäre hin eine Verblendung zugeordnet ist.

Ein abgewinkelter Verlauf des Spalts und/oder eine Verblendung haben den Vorteil, das keine direkte Sicht in den Spalt möglich ist und somit etwaige im Spalt befindliche Kristalle nicht sichtbar sind.

Nach einer Weiterbildung der Erfindung ist vorgesehen, dass sich der Spalt zwischen zwei Baugruppen oder Bauteilen befindet.

Nach einer Weiterbildung der Erfindung ist vorgesehen, dass sich in dem Spalt ein luftdurchlässiges, flüssigkeitsspeicherndes Material befindet. Nach einer Weiterbildung der Erfindung ist vorgesehen, dass das Material ein Faserngeflecht, insbesondere ein enges Faserngeflecht ist. Nach einer Weiterbildung der Erfindung ist vorgesehen, dass das Material Filz ist.

Das luftdurchlässige, flüssigkeitsspeichernde Material verstärkt in vorteilhafter Weise das Hineinziehen und Verbleiben der ausgetretenen Flüssigkeit in den Spalt. Die Flüssigkeit sammelt sich somit in dem Material und kommt dort mit der Außenatmosphäre in Kontakt, so dass sich die Kristalle in dem Material bilden. Durch die Kristalle wird das Material verschlossen, so dass keine Flüssigkeit an der der Dichtung abgewandten Seite des Materials in die Umgebung austreten kann und somit aus den Kristallen und dem Material eine zusätzliche Dichtung gebildet wird. Ist das Material noch nicht mit der Flüssigkeit in Berührung gekommen, beispielsweise zum Zeitpunkt der Montage der Baugruppen, kann die Dichtigkeit der eigentlichen Dichtung trotz des im Spalt befindlichen luftdurchlässigen Materials durch ein Gas, zum Beispiel Luft oder Helium, in herkömmlicher Weise überprüft werden.

Nach einer Weiterbildung der Erfindung ist vorgesehen, dass die Dichtung aus einem Elastomer besteht.

Nach einer Weiterbildung der Erfindung ist vorgesehen, dass die Dichtung Bestandteil eines Verschlusstopfens ist.

Nach einer Weiterbildung der Erfindung ist vorgesehen, dass die Baugruppen Baugruppen eines Kraftfahrzeugs sind.

Die vorliegende Erfindung betrifft auch eine Kraftfahrzeugeinrichtung mit einem System zur Speicherung und/oder zum Transport von Flüssigkeiten, die bei Kontakt mit der Außenatmosphäre Kristalle bilden, und mit einer Dichtungsanordnung, insbesondere mit einer Dichtungsanordnung gemäß der vorstehenden Ausführungen, wobei die Dichtungsanordnung mindestens eine Dichtung enthält und mindestens einen der Dichtung zur Außenatmosphäre hin nachfolgenden Spalt aufweist, in dem durch die Dichtung austretende Flüssigkeit mit der Außenatmosphäre in Kontakt kommt.

Die vorliegende Erfindung betrifft auch die Verwendung einer erfindungsgemäßen Dichtungsanordnung zur Abdichtung von Baugruppen und/oder Bauteilen eines Systems zur Speicherung und/oder zum Transport von Flüssigkeiten, insbesondere in einem Kraftfahrzeug.

Die vorliegende Erfindung betrifft auch die Verwendung einer erfindungsgemäßen Dichtungsanordnung zur Abdichtung von Verbindungen zwischen zwei Baugruppen eines Systems zur Speicherung und/oder zum Transport von Flüssigkeiten, insbesondere in einem Kraftfahrzeug.

Die Zeichnungen veranschaulichen die Erfindung anhand zweier Ausführungsbeispiele. Es zeigen:
- Figuren 1 A und B: schematische Darstellungen von zwei Ausführungsformen der erfindungsgemäßen Dichtungsanordnung bei einem Tank mit Verschlussstopfen;
- Figur 2: eine schematische Darstellung einer Ausführungsform der erfindungsgemäßen Dichtungsanordnung am Übergang von zwei Leitungen.

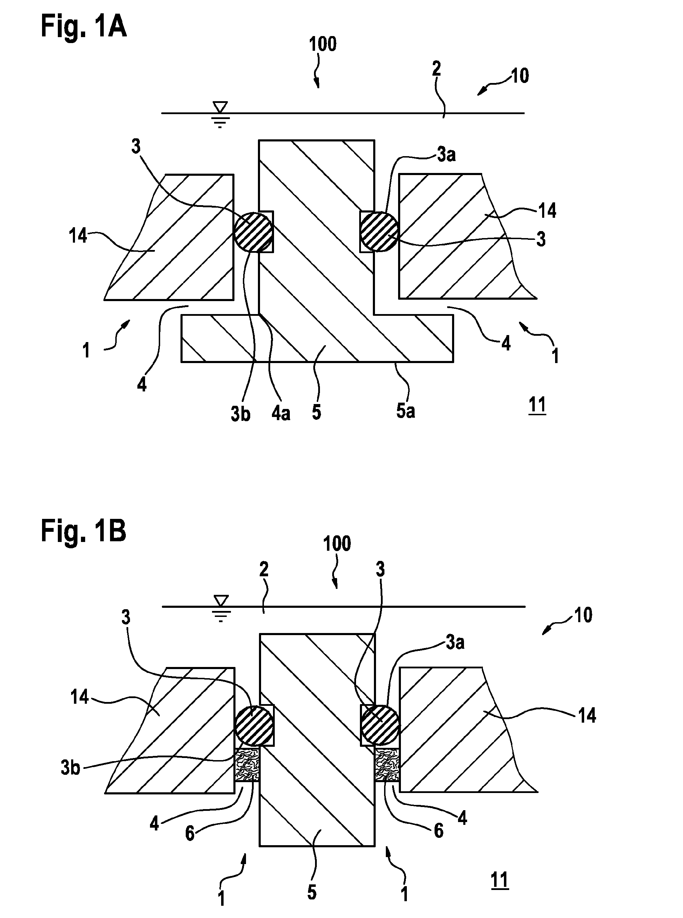

Die Figuren 1A und 1B zeigen im Querschnitt zwei erfindungsgemäße Ausführungsformen, bei denen ein Verschlussstopfen 5 eine als Tank ausgebildete Baugruppe 100 eines Systems zur Speicherung und/oder zum Transport von Flüssigkeiten 2, die bei Kontakt mit der Außenatmosphäre 11 Kristalle bilden, mit Hilfe einer Dichtungsanordnung 1 aus einer Dichtung 3 und einem zur Außenatmosphäre 11 hin nachfolgenden Spalt 4 abdichtet.

Natürlich kann die Baugruppe 100 nicht nur als Tank ausgestaltet sein, sondern als jegliche Vorrichtung zur Lagerung und/oder zum Transport einer Flüssigkeit 2, beispielsweise als Leitung, Rohr, Schlauch, Pumpe oder Dosierungsvorrichtung, insbesondere als Baugruppe 100 eines Kraftfahrzeugs.

Der Verschlusstopfen 5 wird von einer Dichtung 3 in Form eines O-Rings, der beispielsweise aus einem Elastomer besteht, umringt. Natürlich können auch andere Dichtungen vorgesehen sein, zum Beispiel Rechteckdichtungen. Die Dichtung 3 ist somit Bestandteil des Verschlussstopfens 5. Der Verschlussstopfen 5 ist in seiner Dimensionierung einer Öffnung in der Wand 14 der Baugruppe 100 zum Befüllen und/oder Entleeren einer Flüssigkeit 2, die bei Kontakt mit der Außenatmosphäre Kristalle bildet, beispielsweise AdBlue^{®}, angepasst. Dadurch dichtet die Dichtung 3 die Lücke zwischen dem Verschlussstopfen 5 und der Baugruppenwand 14 ab, so dass die Innenseite 10 der Baugruppe 100 von der Außenatmosphäre 11 abgetrennt ist. Der Verschlussstopfen 5 ist ein Bauteil der Baugruppe 100.

Der Spalt 4 folgt an die Außenseite 3b der Dichtung 3 direkt nach und liegt ringförmig um den Verschlussstopfen 5 herum zwischen dem Verschlussstopfen 5 und der Baugruppenwand 14.

Kommt es nun zu einer Leckage, beispielsweise weil sich die Baugruppenwand 14 durch hohe Temperaturen oder durch Schüttelbeanspruchung verformt, so gelangt ein Teil der Flüssigkeit 2 von der Innenseite 3a der Dichtung 3 auf die Außenseite 3b der Dichtung 3 und gelangt somit in den Spalt 4. Dabei können in dem Spalt 4 Kapillarkräfte wirken, die die Leckage in den Spalt 4 ziehen und dort halten. Da Spalt 4 direkten Kontakt mit der Außenatmosphäre 11 hat, kommt auch die Flüssigkeit 2 in Kontakt mit der Außenatmosphäre 11 und es bilden sich Kristalle, im Falle von AdBlue^{®} zum Beispiel Harnstoffkristalle, in den Spalt 4. Diese können als zusätzliche Dichtung ein Austreten von weiterer Flüssigkeit 2 verhindern.

Es kann erfindungsgemäß vorgesehen sein, dass der Spalt 4 eng ist, insbesondere so eng, dass er als Kapillare ausgebildet ist. Ein Fachmann kann ohne weiteres geeignete Dimensionierungen und Formen des Spalts bestimmen.

Figur 1A zeigt nun eine Ausführungsform der Dichtungsanordnung 1, bei der Spalt 4 abgewinkelt verlaufend ausgebildet ist, also einen Winkel 4a aufweist. Der Winkel 4a wird dadurch gebildet, dass der Verschlussstopfen 5 so geformt ist, dass sein Kopf verbreitert ist. Der Verschlusstopfenkopf fungiert also als Verblendung 5a, so dass die Kristallbildung im Spalt 4 von außen nicht direkt sichtbar ist und somit nicht als störend in Erscheinung tritt.

Figur 1B zeigt eine zweite Ausführungsform Der Dichtungsanordnung 1, bei der sich in Spalt 4 ein luftdurchlässiges, flüssigkeitsspeicherndes Material 6, beispielsweise ein Faserngeflecht, insbesondere Filz, befindet. Auch das Material 6 liegt ringförmig um den Verschlussstopfen 5 zwischen dem Verschlussstopfen 5 und der Baugruppenwand 1. Gelangt nun ein Teil der Flüssigkeit 2 wiederum von der Innenseite 3a der Dichtung 3 auf die Außenseite 3b der Dichtung 3 und somit in den Spalt 4, so wird die ausgetretene Flüssigkeit von dem Material 6 aufgenommen. Im Material 6 gelangt die Flüssigkeit 2 in Kontakt mit der Außenatmosphäre 11, so dass sich Kristalle im Material 6 bilden. Die Kristalle vermindern die Durchlässigkeit des Materials 6, so dass die Kombination aus Material 6 und Kristallen der Flüssigkeit 2 in einem Selbstheilungsprozess der Dichtungsanordnung 1 eine zusätzliche Dichtung bilden, die das Austreten von weiterer Flüssigkeit 2 verhindert. Diese zusätzliche Dichtung wirkt somit nur, wenn die Dichtung 3 undicht werden sollte.

Das Material 6 kann im Spalt 4 direkt an der Dichtung 3 anliegen oder etwas Abstand zur Dichtung 3 aufweisen.

Natürlich können die Ausführungsformen der Figuren 1A und 1B kombiniert werden, es können also zum Beispiel sowohl ein Knick 4a und ein Material 6 vorgesehen sein.

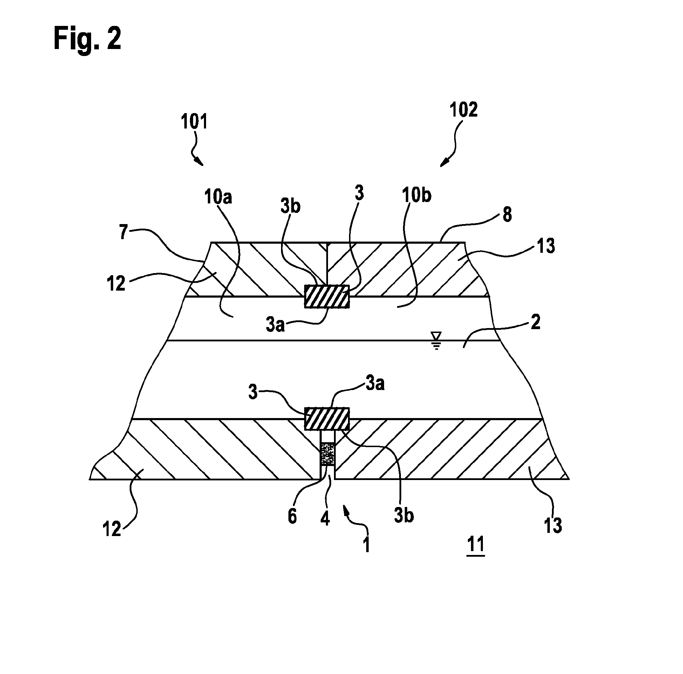

Figur 2 zeigt im Längsquerschnitt eine erfindungsgemäße Ausführungsform, bei der zwei Baugruppen 101, 102, die als Leitungen 7, 8 ausgebildet sind, durch die eine Flüssigkeit 2, die bei Kontakt mit der Außenatmosphäre Kristalle bildet, transportiert werden kann, wobei die Verbindung der zwei Leitungen 7 und 8 mit Hilfe einer Dichtungsanordnung 1 aus einer Dichtung 3 und einem zur Außenatmosphäre 11 hin nachfolgenden Spalt 4 abgedichtet ist.

Die Leitungen 7,8 können beispielsweise Rohre oder Schläuche sein. An der Verbindung zwischen den Enden der Leitung 7 und der Leitung 8 sind diese durch eine Dichtung 3, beispielsweise eine O-Ringdichtung aus einem Elastomer, abgedichtet, so dass die Flüssigkeit 2 ohne Leckage von dem Innenraum 10a der ersten Leitung 7 in den Innenraum 10b der zweiten Leitung 8 gelangen kann. In einem Abschnitt der Verbindung zwischen den Leitungen 7 und 8 ist durch die Enden der Leitungswände 12 und 13 ein Spalt 4 ausgebildet, der der Dichtung 3 zur Außenatmosphäre 11 hin nachfolgt. Der Spalt 4 kann am unteren Teilstück des Leitungsdurchmessers liegen, er kann aber auch breiter ausgestaltet sein, zum Beispiel um den gesamten Leitungsdurchmesser herum liegen. Im Spalt 4 befindet sich ein luftdurchlässiges, flüssigkeitsspeicherndes Material 6. Gelangt nun ein Teil der Flüssigkeit 2 von der Innenseite 3a der Dichtung 3 auf die Außenseite 3b der Dichtung 3 und somit in den Spalt 4, so wird die ausgetretene Flüssigkeit von dem Material 6 aufgenommen. Im Material 6 gelangt die Flüssigkeit 2 in Kontakt mit der Außenatmosphäre 11, so dass sich Kristalle im Material 6 bilden. Die Kristalle vermindern die Durchlässigkeit des Materials 6, so dass die Kombination aus Material 6 und Kristallen der Flüssigkeit 2 in einem Selbstheilungsprozess der Dichtungsanordnung 1 eine zusätzliche Dichtung bilden, die das Austreten von weiterer Flüssigkeit 2 verhindert.

Natürlich können die in Figur 1 genannten Ausführungsformen der Merkmale der Dichtungsanordnung 1 auch für die Dichtungsanordnung 1 der Figur 2 vorgesehen sein und umgekehrt.

## Patentansprüche

1. Dichtungsanordnung (1) zur Abdichtung zur Außenatmosphäre (11) hin von Baugruppen (100) eines Systems zur Speicherung und/oder zum Transport von Flüssigkeiten (2), die bei Kontakt mit der Außenatmosphäre (11) Kristalle bilden, wobei die Dichtungsanordnung (1) mindestens eine Dichtung (3) enthält, **dadurch gekennzeichnet, dass** die Dichtungsanordnung (1) mindestens einen der Dichtung (3) zur Außenatmosphäre (11) hin nachfolgenden Spalt (4) aufweist, der so gestaltet ist, daß durch die Dichtung (3) austretende Flüssigkeit (2) darin verbleiben, mit der Außenatmosphäre (11) in Kontakt kommen und Kristalle bilden kann.

2. Dichtungsanordnung (1) nach einem der vorhergehenden Ansprüche, **dadurch gekennzeichnet, dass** der Spalt (4) abgewinkelt verlaufend ausgebildet ist.

3. Dichtungsanordnung (1) nach einem der vorhergehenden Ansprüche, **dadurch gekennzeichnet, dass** dem Spalt zur Außenatmosphäre hin eine Verblendung (5a) zugeordnet ist.

4. Dichtungsanordnung (1) nach einem der vorhergehenden Ansprüche, **dadurch gekennzeichnet, dass** sich der Spalt (4) zwischen zwei Baugruppen (101; 102) oder Bauteilen (5) befindet.

5. Dichtungsanordnung (1) nach einem der vorhergehenden Ansprüche, **dadurch gekennzeichnet, dass** sich in dem Spalt (4) ein luftdurchlässiges, flüssigkeitsspeicherndes Material (6) befindet.

6. Dichtungsanordnung (1) nach Anspruch 5, **dadurch gekennzeichnet, dass** das Material (6) ein Faserngeflecht ist.

7. Dichtungsanordnung (1) nach einem der vorhergehenden Ansprüche, **dadurch gekennzeichnet, dass** die Dichtung (3) aus einem Elastomer besteht.

8. Dichtungsanordnung (1) nach einem der vorhergehenden Ansprüche, **dadurch gekennzeichnet, dass** die Dichtung (3) Bestandteil eines Verschlusstopfens (5) ist.

9. Dichtungsanordnung (1) nach einem der vorhergehenden Ansprüche, **dadurch gekennzeichnet, dass** die Baugruppen (100; 101; 102) Baugruppen eines Kraftfahrzeugs sind.

10. Kraftfahrzeugeinrichtung mit einem System zur Speicherung und/oder zum Transport von Flüssigkeiten (2), die bei Kontakt mit der Außenatmosphäre (11) Kristalle bilden, und mit einer Dichtungsanordnung (1) nach einem der Ansprüche 1 bis 9.

## Claims

1. Seal arrangement (1) for sealing with respect to the external atmosphere (11) of modules (100) of a system for storing and/or for transporting liquids (2) which form crystals upon contact with the external atmosphere (11), the seal arrangement (1) comprising at least one seal (3), **characterized in that** the seal arrangement (1) has at least one gap (4) which follows the seal (3) in the direction of the external atmosphere (11) and is designed in such way that liquid (2) which exits through the seal (3) can remain therein, can come into contact with the external atmosphere (11) and can form crystals.

2. Seal arrangement (1) according to the preceding claim, **characterized in that** the gap (4) is configured so as to run in an angled-away manner.

3. Seal arrangement (1) according to one of the preceding claims, **characterized in that** the gap is assigned an orifice plate (5a) towards the external atmosphere.

4. Seal arrangement (1) according to one of the preceding claims, **characterized in that** the gap (4) is situated between two modules (101; 102) or components (5) .

5. Seal arrangement (1) according to one of the preceding claims, **characterized in that** an air-permeable, liquid-storing material (6) is situated in the gap (4).

6. Seal arrangement (1) according to Claim 5, **characterized in that** the material (6) is a fibrous mesh.

7. Seal arrangement (1) according to one of the preceding claims, **characterized in that** the seal (3) is composed of an elastomer.

8. Seal arrangement (1) according to one of the preceding claims, **characterized in that** the seal (3) is a constituent part of a closing plug (5).

9. Seal arrangement (1) according to one of the preceding claims, **characterized in that** the modules (100; 101; 102) are modules of a motor vehicle.

10. Motor vehicle device having a system for storing and/or for transporting liquids (2) which form crystals upon contact with the external atmosphere (11), and having a seal arrangement (1) according to one of Claims 1 to 9.

## Revendications

1. Agencement d'étanchéité (1) pour réaliser l'étanchéité par rapport à l'atmosphère extérieure (11) de modules (100) d'un système d'accumulation et/ou de transport de liquides (2) qui forment des cristaux lors du contact avec l'atmosphère extérieure (11), l'agencement d'étanchéité (1) comportant au moins un joint d'étanchéité (3), **caractérisé en ce que** l'agencement d'étanchéité (1) comprend au moins un interstice (4) suivant le joint d'étanchéité (3) en direction de l'atmosphère extérieure (11), lequel interstice est configuré de telle sorte que du liquide (2) sortant à travers le joint d'étanchéité (3) puisse y rester, venir en contact avec l'atmosphère extérieure (11) et former des cristaux.

2. Agencement d'étanchéité (1) selon la revendication précédente, **caractérisé en ce que** l'interstice (4) est réalisé de manière à s'étendre de façon inclinée.

3. Agencement d'étanchéité (1) selon l'une quelconque des revendications précédentes, **caractérisé en ce qu'**un revêtement (5a) est associé à l'interstice en direction de l'atmosphère extérieure.

4. Agencement d'étanchéité (1) selon l'une quelconque des revendications précédentes, **caractérisé en ce que** l'interstice (4) se trouve entre deux modules (101 ; 102) ou composants (5).

5. Agencement d'étanchéité (1) selon l'une quelconque des revendications précédentes, **caractérisé en ce qu'**un matériau (6) perméable à l'air et retenant des liquides se trouve dans l'interstice (4).

6. Agencement d'étanchéité (1) selon la revendication 5, **caractérisé en ce que** le matériau (6) est un entrelacement de fibres.

7. Agencement d'étanchéité (1) selon l'une quelconque des revendications précédentes, **caractérisé en ce que** le joint d'étanchéité (3) est constitué d'un élastomère.

8. Agencement d'étanchéité (1) selon l'une quelconque des revendications précédentes, **caractérisé en ce que** le joint d'étanchéité (3) fait partie d'un bouchon de fermeture (5).

9. Agencement d'étanchéité (1) selon l'une quelconque des revendications précédentes, **caractérisé en ce que** les modules (100 ; 101 ; 102) sont des modules d'un véhicule automobile.

10. Équipement de véhicule automobile comprenant un système d'accumulation et/ou de transport de liquides (2) qui forment des cristaux lors du contact avec l'atmosphère extérieure (11), et comprenant un agencement d'étanchéité (1) selon l'une quelconque des revendications 1 à 9.
